# FASCICULE DE BREVET EUROPEEN

(11) **EP 2 577 404 B1**
(45) Date de publication et mention de la délivrance du brevet: **05.10.2016**
(21) Numéro de dépôt: 11723413.8
(22) Date de dépôt: 23.05.2011
(51) Int. Cl.: G04B 1/10, G04B 1/14, G04B 1/16, G04B 1/18, G04D 3/00

(54) **RESSORT DE BARILLET**
TONNENFEDER
BARREL SPRING

(30) Priorité: 27.05.2010 EP 10164172
(43) Date de publication de la demande: 10.04.2013
(73) Titulaire: Association Suisse pour la Recherche Horlogère (ASRH), 2002 Neuchâtel (CH)
(72) Inventeur: WINKLER, Pascal, 2072 Saint-Blaise (CH); TERES, Yvan, 2013 Colombier (CH)
(74) Mandataire: GLN SA
(86) Numéro de dépôt international: PCT/EP2011/058380
(87) Numéro de publication internationale: WO 2011/147782

(56) Documents cités:
- EP-A1- 1 837 717
- EP-A1- 2 180 385
- EP-A2- 1 655 642
- CH-A2- 698 962
- DE-C- 233 614
- FR-A1- 2 217 739
- US-A1- 2007 214 621
- GLENN ORVEILLON-DUBAJIC: "Verres métalliques : conception, synthèse et caractérisation des propriétés magnétiques et de transport", THESE UNIVERSITE BORDEAUX,, 21 février 2008 (2008-02-21), pages 1-162, XP007915284,
- David Spring: "Les noces du verre et du métal", , 15 juillet 2004 (2004-07-15), XP002604518, Extrait de l'Internet: URL:http://www.hebdo.ch/les_noces_du_verre _et_du_meacutetal_18530_.html [extrait le 2010-10-06]

## Description

### Domaine technique

La présente invention se rapporte au domaine des mécanismes entraînés par un ressort moteur, notamment au domaine de l'horlogerie. Elle concerne, plus particulièrement, un ressort de barillet formé d'un ruban en verre métallique monolithique.

Dans la présente demande, le terme de ressort doit être interprété comme un ruban réalisé en un matériau présentant des propriétés élastiques et qui comprend une portion d'attache à chacune de ses extrémités, permettant au ruban d'emmagasiner et de restituer de l'énergie mécanique.

### Etat de la technique

On connait du document CH 698962, la possibilité de réaliser des rubans destinés à être utilisés comme ressorts de barillet en verre métallique, monolithique. Le terme « verre métallique » désigne un alliage métallique amorphe ou métal amorphe, dont l'objet solide est obtenu à partir de l'alliage fondu. Les propriétés intrinsèques des verres métalliques leur confèrent de très bonnes aptitudes élastiques, une excellente ductilité, une grande résistance mécanique ainsi qu'un comportement en fatigue optimisé. L'application de ce type de matériau à des ressorts de barillet, notamment pour pièce d'horlogerie, est donc particulièrement bien adaptée.

Le document précité propose également une méthode de réalisation d'un tel ruban en verre métallique, dans laquelle on donne à une lame de verre métallique une forme aussi proche que possible d'une forme prédéterminée, par une technique dite de Planar Flow Casting (trempe sur roue), avant d'effectuer la relaxation de la lame pour fixer sa forme en la chauffant, avant, finalement, de la refroidir. Il est mentionné que, dans une étape supplémentaire, une bride glissante peut être assemblée à la dernière spire du ressort pour permettre son montage dans un tambour de barillet. L'assemblage de la spire intérieure de la lame sur l'arbre de barillet n'est pas mentionné. Une autre étape supplémentaire doit être appliquée au ruban pour lui permettre d'être relié à un arbre de barillet. Ainsi, ce document ne prévoit que la réalisation d'un ruban en verre métallique monolithique et pas, à proprement parler, la réalisation d'un ressort en verre métallique, puisque des portions d'attache doivent être ajoutées ou ménagées sur le ruban obtenu selon le procédé décrit dans la demande de brevet.

La présente invention se propose d'aller plus loin dans l'utilisation de verre métallique pour la réalisation de ressort de barillet, y compris dans la méthode pour y parvenir.

### Divulgation de l'invention

Particulièrement, la présente invention propose de réaliser un ressort de barillet selon la revendication 1. La présente invention concerne également un procédé de réalisation d'un tel ressort selon la revendication 13.

Selon un autre aspect, le ruban comprend au moins une partie fonctionnelle venue de matière avec le ruban pour réaliser au moins une fonction supplémentaire à la fonction ressort. Par fonction supplémentaire à la fonction ressort, on entend une fonction autre que le stockage ou la restitution d'énergie mécanique ou que les fonctions d'attache du ruban, qui sont considérées comme inhérentes à la fonction ressort.

Différentes fonctions supplémentaires peuvent ainsi être réalisées, comme mentionné dans les revendications. Ces fonctions peuvent éventuellement être combinées entre elles.

### Brève description des dessins

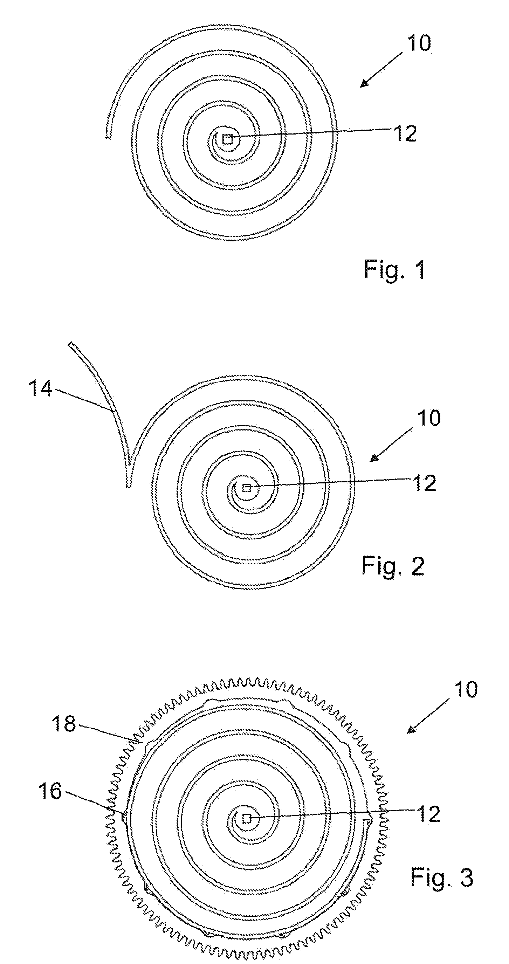

D'autres détails de l'invention apparaîtront plus clairement à la lecture de la description qui suit, proposée en référence au dessin annexé, dans lequel les figures 1 à 6 illustrent différentes variantes de ressort de barillet selon l'invention.

### Mode(s) de réalisation de l'invention

Les figures proposent des ressorts de barillet en verre métallique. Outre la fonction normale d'un ressort de barillet, c'est-à-dire la fonction ressort permettant d'emmagasiner de l'énergie grâce à un ruban en matériau élastique dont les extrémités sont pourvues de portions d'attache, les ressorts de barillet selon l'invention intègrent une fonction supplémentaire. Autrement dit, dans une réalisation monolithique, les ressorts de barillet sont conformés de manière à présenter une partie fonctionnelle, permettant de réaliser cette fonction supplémentaire. Ainsi, par fonction supplémentaire à la fonction ressort, on entend une fonction autre que les fonctions de stockage de l'énergie, les portions d'attache du ruban participant à la fonction de ressort.

Cette possibilité est notamment offerte par un procédé de réalisation qui est un aspect de l'invention. En effet, l'une des idées intéressantes ayant permis d'aboutir à l'invention est d'utiliser une méthode de fabrication totalement différente de ce que propose l'état de la technique, particulièrement le document précité, pour obtenir un ressort de barillet en verre métallique.

Ce procédé comprend tout d'abord la réalisation d'un moule ayant la forme de la pièce que l'on souhaite obtenir. Ce moule est avantageusement réalisé en silicium par des techniques de gravure profonde. Le moule résiste ainsi aux températures de fusion des verres métalliques, tout en permettant de réaliser des formes complexes, de manière très précise. Ces techniques sont bien connues de l'homme du métier et n'ont pas besoin d'être décrites de manière complète.

Le moule étant obtenu, on peut ensuite couler du verre métallique dans le moule, refroidir le verre de manière à conserver un état amorphe, et démouler la pièce. Pour la coulée, le verre peut être en phase liquide ou en phase pâteuse. La précision des moules réalisés fait qu'il n'est même pas indispensable de retoucher les pièces obtenues. En outre, pour le démoulage, on peut dissoudre le moule, ce qui permet son élimination, quelle que soit la complexité de la pièce réalisée, sans abîmer celle-ci. On notera que les ressorts pourraient également être moulés dans un moule en cu ivre.

Grâce à ce procédé, il est ainsi possible de réaliser divers ressorts de barillet 10, intégrant une fonction supplémentaire. Tout d'abord, comme le montre particulièrement la figure 1, le ressort en tant que tel est réalisé de manière monolithique. Plus précisément, le ruban et les portions d'attache situées à chacune de ses extrémités sont ainsi moulés de façon monobloc. Le ressort peut ainsi être monté sur l'arbre de barillet, de manière à rendre solidaires en rotation le ressort et l'arbre. On peut ainsi supprimer la bonde habituelle au niveau de l'arbre de barillet et intégrer cette bonde, directement au niveau du centre ou du moyeu du ressort, cette bonde étant réalisée par un trou non circulaire 12, par exemple de forme carrée, qui, par coopération avec un arbre de forme correspondante, peut bloquer la rotation du ressort en référence à l'arbre.

Les figures 2 et 3 proposent un ressort dans lequel la dernière spire du ressort, outre la portion d'attache qu'elle comporte, présente également une fonction supplémentaire de limitation du couple d'armage du barillet. Cette fonction est réalisée par une bride glissante intégrée à la dernière spire du ressort. Sur la figure 2, le ressort présente une bride glissante « traditionnelle ». La dernière spire se termine par une portion supplémentaire 14 s'étendant vers l'extérieur, dans le sens inverse d'enroulement du spiral. La portion supplémentaire 14 étant réalisée de manière monolithique, et non rapportée, on évite ainsi une opération d'assemblage. On évite également toute modification de la structure du matériau au niveau de la liaison entre le ressort et la portion supplémentaire, modification que l'on risque d'avoir notamment lors d'une opération de soudage.

Sur la figure 3, la bride glissante est obtenue en réalisant, sur le pourtour extérieur de la dernière spire, une structure destinée à coopérer avec une structure complémentaire d'un tambour de barillet à l'intérieur duquel est monté le ressort. Particulièrement, la dernière spire peut présenter des ergots 16 destinés à coopérer avec des cavités 18 ménagées sur le pourtour intérieur du tambour. La coopération des ergots 16 avec les cavités 18 permet de désolidariser le tambour et le ressort au-delà d'un certain couple d'armage, défini par les forces exercées entre les ergots 16 et les cavités 18.

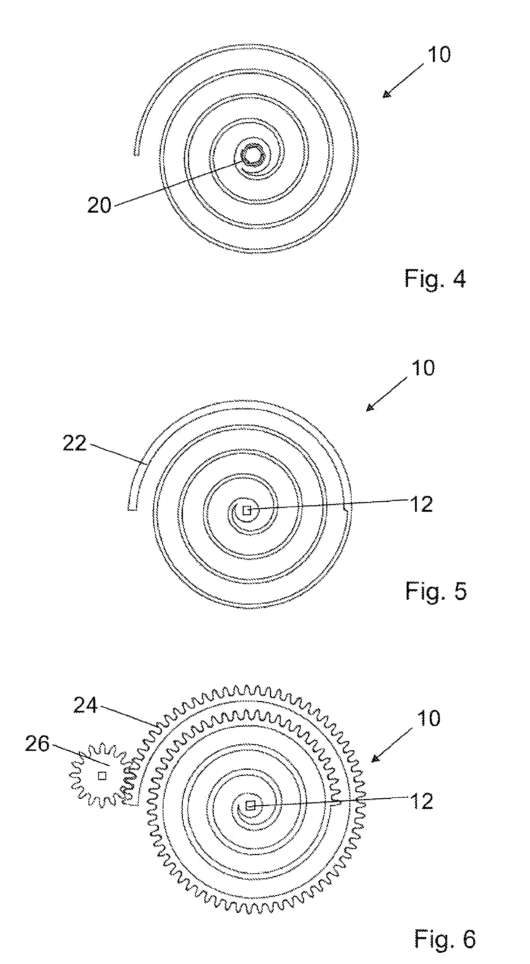

La figure 4 propose une fonction d'embrayage unidirectionnel permettant d'éviter que le ressort soit déformé et contraint dans le mauvais sens de rotation. Le moyeu présente ainsi une structure adaptée permettant, lorsque l'arbre de barillet est entraîné dans une direction, d'entraîner le ressort, tandis que la liaison entre l'arbre et le ressort est débrayée lorsque l'arbre est entraîné dans l'autre direction. Le moyeu du ressort peut ainsi comporter des encoches 20 définissant des cliquets élastiques, pour coopérer avec une structure correspondante ménagée au niveau de l'arbre. Lorsque l'arbre pivote dans une première direction, il entraîne les cliquets qui coopèrent rigidement avec lui pour armer le ressort, tandis que lorsque l'arbre pivote dans l'autre direction, les cliquets décliquètent et le ressort n'est pas entraîné.

Le ressort illustré sur la figure 5 réalise une fonction supplémentaire qui permet de maîtriser l'excentricité du développement du ressort, en mettant en oeuvre une portion du ruban, par exemple la dernière spire, dont l'épaisseur est variable. En agissant sur la rigidité élastique d'une portion de la lame, on peut corriger les problèmes de centrage observé lors du développement d'un ressort spiral. On peut ainsi, en ajustant l'épaisseur de la dernière spire du ressort, faire en sorte que le moyeu du ressort reste bien centré par rapport au barillet, ce qui permet ainsi de réduire les contraintes exercées sur l'arbre et sur les pivots. Cela permet de réduire l'usure des pivots et des paliers, et, par conséquent, leurs dimensions. Il est même envisageable, de la sorte, de supprimer les pivots du barillet et de ne garder qu'un élément de liaison permettant de transmettre le couple du ressort. On peut également réaliser une dernière spire possédant une portion 22 plus épaisse que le reste du ruban, afin de limiter le couple d'armage du barillet.

Enfin, le ressort proposé à la figure 6 présente une fonction supplémentaire d'entraînement cinématique, mettant en oeuvre une portion de lame dont le pourtour extérieur définit une denture 24. Cette denture 24 peut engrener directement avec le rouage de la montre représenté par une roue 26, ce qui permet de supprimer le tambour du barillet.

A titre d'exemple, on a réalisé un ressort de barillet du type de celui proposé à la figure 3. La spire présente, dans ce cas particulier, une section rectangulaire de hauteur 1 mm et d'épaisseur 0.25 mm. Cet exemple a été réalisé en moulant un alliage PdCuNiP liquide (T > 800K) dans un moule en silicium structuré. Après avoir été coulé, l'alliage en fusion est ensuite pressé dans le moule à l'aide d'un piston amovible à haute conductivité thermique, permettant d'évacuer très rapidement la chaleur et de refroidir le ressort en conservant la nature amorphe du matériau. Dans une autre réalisation, le même ressort a été réalisé par le même procédé, dans un alliage de type ZrCuTiNiAl. Dans un autre exemple, le moulage a été réalisé en phase pâteuse de l'alliage en état amorphe, c'est-à-dire à une température de l'alliage et du moule légèrement au-dessus de la transition vitreuse. Dans ce cas, le piston amovible est préchauffé à une température à +/-50K autour de la température de transition vitreuse de l'alliage.

Les fonctions proposées ci-dessus peuvent, pour certaines, être combinées entre elles. Les figures ne sont que des exemples non limitatifs de l'invention dont l'essence est définie dans les revendications.

## Revendications

1. Ressort de barillet (10) pour mécanisme entraîné par un ressort moteur, notamment pour pièce d'horlogerie, formé d'un ruban en verre métallique monolithique comprenant, à une première extrémité, une portion d'attache et, à une deuxième extrémité, une portion d'attache à un arbre de barillet, **caractérisé en ce que** ledit ruban et lesdites portions d'attache sont moulées de façon monobloc de telle sorte que la seconde extrémité forme un moyeu du ressort comportant une bonde de liaison à un dit arbre de barillet.

2. Ressort (10) selon la revendication 1, **caractérisé en ce que** la bonde de liaison comporte un trou non circulaire (12) disposé selon un axe perpendiculaire au plan du ressort.

3. Ressort selon la revendication 1 ou 2, **caractérisé en ce que** le ruban comprend une bride intégrée à la dernière spire du ressort.

4. Ressort selon l'une des revendications 1 à 3, **caractérisé en ce qu'**il comporte, venue de matière avec le ruban, une bride glissante intégrée à la dernière spire du ressort, pour réaliser une fonction de limitation du couple d'armage du barillet.

5. Ressort selon la revendication 4, **caractérisé en ce que** la dernière spire se termine par une portion supplémentaire (14) s'étendant vers l'extérieur.

6. Ressort selon la revendication 4, **caractérisé en ce que** la dernière spire possède une portion plus épaisse (22) que le reste du ruban.

7. Ressort selon la revendication 4, **caractérisé en ce que** la dernière spire comporte, sur son pourtour extérieur, une structure destinée à coopérer avec une structure complémentaire d'un tambour de barillet.

8. Ressort selon la revendication 7, **caractérisé en ce que** la dernière spire comporte, sur son pourtour extérieur, des ergots (16) destinés à coopérer avec des cavités (18) ménagées sur le pourtour intérieur d'un tambour de barillet.

9. Ressort selon l'une des revendications précédentes, **caractérisé en ce qu'**il comporte en son moyeu une structure adaptée pour réaliser une fonction d'embrayage unidirectionnel, ladite structure étant venue de matière avec le ruban.

10. Ressort selon la revendication 9, **caractérisé en ce que** le moyeu du ressort comporte des encoches (20) définissant des cliquets élastiques.

11. Ressort selon l'une des revendications 1 à 10, **caractérisé en ce qu'**il comporte une portion du ruban dont l'épaisseur est variable, pour réaliser une fonction de centrage du développement du ressort.

12. Ressort selon l'une des revendications 1 à 10, **caractérisé en ce qu'**il comporte une portion de ruban dont le pourtour extérieur définit une denture (24), pour réaliser une fonction d'entraînement cinématique.

13. Procédé de réalisation d'un ressort selon l'une des revendications précédentes, comprenant les étapes suivantes :
- réaliser un moule en silicium par des techniques de gravure profonde, ledit moule ayant la forme du ressort que l'on souhaite obtenir,
- couler du verre métallique dans le moule,
- refroidir le verre, et
- démouler le ressort.

14. Procédé selon la revendication 13, **caractérisé en ce que**, après la coulée, le ressort est pressé dans le moule.

15. Barillet comprenant un arbre de barillet et un tambour, ainsi qu'un ressort de barillet selon l'une des revendications 1 à 11 logé dans le tambour, **caractérisé en ce que** la seconde extrémité du ressort est solidaire de l'arbre de barillet par l'intermédiaire de sa bonde de liaison.

## Patentansprüche

1. Tonnenfeder (10) für von einer Antriebsfeder angetriebenen Mechanismus, insbesondere für eine Uhr, gebildet von einem monolithischen Band aus metallischem Glas, umfassend, an einem ersten Ende, einen Befestigungsabschnitt, und an einem zweiten Ende, einen Befestigungsabschnitt an einer Federwelle, **dadurch gekennzeichnet, dass** das Band und die Befestigungsabschnitte in Monoblockweise derart geformt sind, dass das zweite Ende eine Nabe der Feder bildet, die einen Verbindungsbund mit einer Federwelle umfasst.

2. Feder (10) nach Anspruch 1, **dadurch gekennzeichnet, dass** der Verbindungsbund ein nicht kreisrundes Loch (12) aufweist, das gemäß einer zur Ebene der Feder senkrechten Achse angeordnet ist.

3. Feder nach Anspruch 1 oder 2, **dadurch gekennzeichnet, dass** das Band einen in die letzte Windung der Feder integrierten Zaum umfasst.

4. Feder nach einem der Ansprüche 1 bis 3, **dadurch gekennzeichnet, dass** sie, materialeinheitlich mit dem Band, einen gleitenden Zaum aufweist, der in die letzte Windung der Feder integriert ist, um eine Begrenzungsfunktion des Spannungsmoments zu erfüllen.

5. Feder nach Anspruch 4, **dadurch gekennzeichnet, dass** die letzte Windung mittels eines zusätzlichen Abschnitts (14) endet, der sich nach außen erstreckt.

6. Feder nach Anspruch 4, **dadurch gekennzeichnet, dass** die letzte Windung einen dickeren Abschnitt (22) als der Rest des Bands besitzt.

7. Feder nach Anspruch 4, **dadurch gekennzeichnet, dass** die letzte Windung auf ihrem äußeren Umfang eine Struktur aufweist, die bestimmt ist, mit einer komplementären Struktur einer Federhaustrommel zusammenzuwirken.

8. Feder nach Anspruch 7, **dadurch gekennzeichnet, dass** die letzte Windung auf ihrem äußeren Umfang Sporne (16) aufweist, die bestimmt sind, mit auf dem inneren Umfang einer Federhaustrommeln ausgebildeten Hohlräumen (18) zusammenzuwirken.

9. Feder nach einem der vorangehenden Ansprüche, **dadurch gekennzeichnet, dass** sie in ihrer Nabe eine Struktur aufweist, die ausgebildet ist, um eine eindirektionale Kupplungsfunktion zu erfüllen, wobei die Struktur mit dem Band materialeinheitlich ist.

10. Feder nach Anspruch 9, **dadurch gekennzeichnet, dass** die Nabe der Feder Kerben (20) aufweist, die elastische Sperrkegel definieren.

11. Feder nach einem der Ansprüche 1 bis 10, **dadurch gekennzeichnet, dass** sie einen Bandabschnitt aufweist, dessen Stärke variabel ist, um eine Zentrierfunktion der Entwicklung der Feder zu erfüllen.

12. Feder nach einem der Ansprüche 1 bis 10, **dadurch gekennzeichnet, dass** sie einen Bandabschnitt aufweist, dessen äußerer Umfang eine Zahnung (24) definiert, um eine kinematische Antriebsfunktion zu erfüllen.

13. Herstellungsverfahren einer Feder nach einem der vorangehenden Ansprüche, umfassend die folgenden Schritte:
- Herstellen einer Siliziumform mit Hilfe der Tiefgravurtechniken, wobei die Form die Form der Feder hat, die man erhalten möchte,
- Gießen des metallischen Glases in die Form,
- Abkühlen des Glases und
- Entformen der Feder.

14. Verfahren nach Anspruch 13, **dadurch gekennzeichnet, dass** die Feder nach dem Gießen in die Form gepresst wird.

15. Federhaus, umfassend eine Federwelle und eine Trommel sowie eine Tonnenfeder nach einem der Ansprüche 1 bis 11, die in der Trommel untergebracht ist, **dadurch gekennzeichnet, dass** das zweite Ende der Feder mit der Federwelle mittels seines Verbindungsbunds fest verbunden ist.

## Claims

1. A barrel spring (10) for a mechanism driven by a mainspring, in particular for a timepiece, formed by a strip made from monolithic metallic glass comprising, at a first end, a fastening portion, at a second end, a fastening portion to a barrel-arbor, **characterized in that** said strip and said fastening portions are molded in a single piece such that the second end forms a hub of the spring including a connecting core to one said barrel-arbor.

2. The spring (10) according to claim 1, **characterized in that** the connecting core includes a non-circular hole (12) arranged along an axis perpendicular to the plane of the spring.

3. The spring according to claim 1 or 2, **characterized in that** the strip comprises a flange integrated into the last turn of the spring.

4. The spring according to one of claims 1 to 3, **characterized in that** it includes, integral with the strip, a sliding flange integrated into the last turn of the spring, to serve to limit the winding torque of the barrel.

5. The spring according to claim 4, **characterized in that** the last turn ends with an additional portion (14) extending toward the outside.

6. The spring according to claim 4, **characterized in that** the last turn has a portion (22) that is thicker than the rest of the strip.

7. The spring according to claim 4, **characterized in that** the last turn includes, on its outer perimeter, a structure intended to cooperate with an additional structure of a barrel drum.

8. The spring according to claim 7, **characterized in that** the last turn includes, on its outer perimeter, lugs (16) intended to cooperate with cavities (18) arranged on the inner perimeter of a barrel drum.

9. The spring according to one of the preceding claims, **characterized in that** it includes, in its hub, a structure suitable for performing a unidirectional coupling function, said structure being integral with the strip.

10. The spring according to claim 9, **characterized in that** the hub of the spring includes notches (20) defining elastic clicks.

11. The spring according to one of claims 1 to 10, **characterized in that** it includes a portion of the strip having a variable thickness, to perform a function of centering the development of the spring.

12. The spring according to one of claims 1 to 10, **characterized in that** it includes a strip portion whereof the outer perimeter defines a toothing (24), to perform a kinematic driving function.

13. A method for producing a spring according to one of the preceding claims, comprising the following steps:
- producing a silicon mold using deep etching techniques, the mold having the shape of the spring one wishes to obtain,
- pouring metallic glass into the mold,
- cooling the glass, and
- stripping the spring.

14. The method according to claim 13, **characterized in that**, after the pouring, the spring is pressed in the mold.

15. A barrel comprising a barrel-arbor and a drum, as well as a barrel spring according to one of claims 1 to 11 housed in the drum, **characterized in that** the second end of the spring is secured to the barrel-arbor via its connecting core.
